Europäisches Patentamt

European Patent Office

Office européen des brevets

(19)

(11) EP 0 410 462 B1

(12) **EUROPEAN PATENT SPECIFICATION**

(45) Date of publication and mention
of the grant of the patent:
**06.03.1996  Bulletin 1996/10**

(51) Int Cl.6: **G06F 3/06**

(21) Application number: 90114387.5

(22) Date of filing: **26.07.1990**

(54) **Information processing system and semiconductor auxiliary storage for use in the system**

Informationsverarbeitungssystem und Halbleiter-Hilfsspeicher zur Anwendung in diesem System

Système de traitement d'information et mémoire auxiliaire semi-conductrice pour une utilisation dans ce système

(84) Designated Contracting States:
**DE FR GB**

(30) Priority: **28.07.1989 JP 195866/89**
**28.07.1989 JP 195867/89**
**28.08.1989 JP 221237/89**

(43) Date of publication of application:
**30.01.1991  Bulletin 1991/05**

(73) Proprietor: **SEIKO EPSON CORPORATION**
**Shinjuku-ku Tokyo-to (JP)**

(72) Inventors:
 • **Kobayashi, Junichi**
 **Suwa-shi, Nagano-ken (JP)**
 • **Tateno, Hiroaki**
 **Suwa-shi, Nagano-ken (JP)**
 • **Ikeda, Masayuki**
 **Suwa-shi, Nagano-ken (JP)**
 • **Samejima, Shogo**
 **Suwa-shi, Nagano-ken (JP)**

(74) Representative:
**Hoffmann, Eckart, Dipl.-Ing. et al**
**Patentanwalt,**
**Bahnhofstrasse 103**
**D-82166 Gräfelfing (DE)**

(56) References cited:
 FR-A- 2 587 824          GB-A- 2 093 236
 GB-A- 2 172 126          US-A- 4 984 149

 • IBM TECHNICAL DISCLOSURE BULLETIN. vol.
 31, no. 5, October 1988, NEW YORK US pages
 52 - 58; "Personal computer network
 attachment arrangement using a diskette
 adapter"
 • ELEKTROTECHNIK. vol. 65, no. 9, 11 May 1983,
 WURZBURG DE pages 19 - 21; S. Gassner et
 al.: "Halbleiterfloppy sind schneller"
 • RADIO FERNSEHEN ELEKTRONIK. vol. 36, no.
 5, 1987, BERLIN DD pages 323 - 325; E.
 Kücklich et al.: "256-Kbyte-dram im
 U-880-System"
 • PATENT ABSTRACTS OF JAPAN vol. 6, no. 212
 (P-151)(1090) 26 October 1982, & JP-A- 57
 117055 (SHARP K. K.) 21 July 1982,
 • PATENT ABSTRACTS OF JAPAN vol. 13, no. 96
 (P-839) 07 March 1989, & JP-A- 63 276650 (OKI
 ELECTRIC IND. CO. LTD.) 14 November 1988,

**Description**

**Background of the Invention**

This invention relates generally to an information processing system of a relatively small size such as a personal computer, and more particularly to an information processing system having a compact and high speed auxiliary storage for storing data and programs.

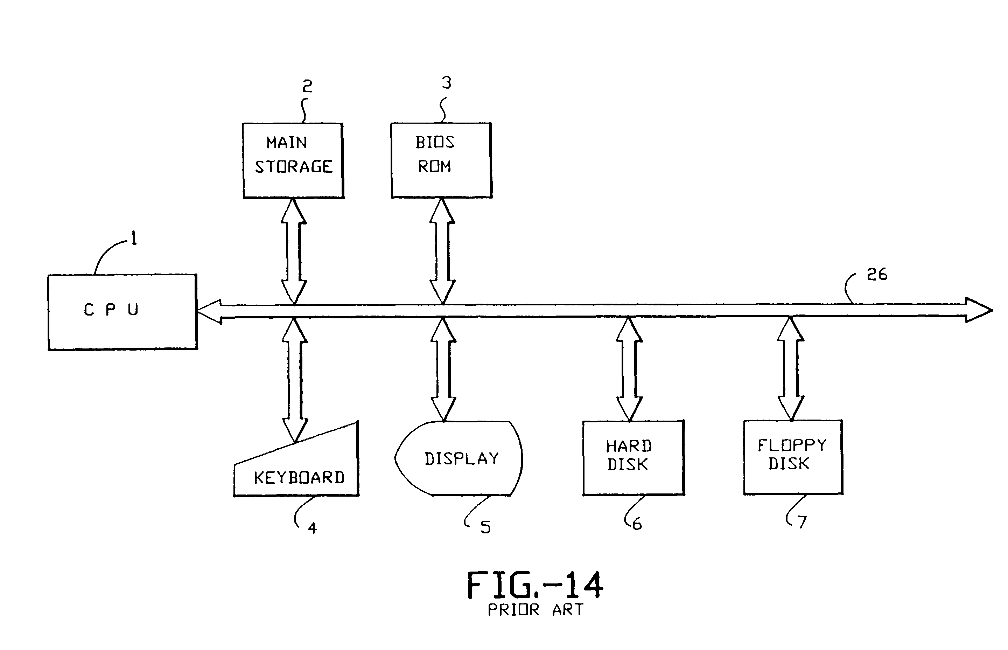

A conventional information processing system is generally configured as shown in Fig. 14. Such a system comprises a central processing unit (CPU) 1 which is a heart of the system. CPU 1 is connected through system bus 26 to main storage 2 in which programs and data transferred from the auxiliary storage and intermediate results of programs being executed are stored, read-only memory (ROM) 3 which stores a basic input/output system (BIOS), keyboard 4 which functions as an input device to the system, display 5 which functions as an output device, a hard disk 6 and a floppy disk 7 which function as an auxiliary storage to store programs and data.

When power is turned on to the system, the system is reset and initialized and CPU 1 executes an initial load program (ILP) stored in BIOS ROM 3 to transfer the programs from hard disk 6 or the floppy disk 7 to main storage 2. Thereafter, CPU 1 executes the programs transferred to main storage 2 to accomplish the objectives of the programs.

The magnetic storage such as hard disk 6 or floppy disk 7 which are employed as the auxiliary storage has a limit in its possible size reduction, weight reduction and power consumption reduction. As a result, the presence of the magnetic storage imparts a large restriction to the realization of a compact information system featuring actual portability.

Since the prior art floppy disk drive or the hard disk drive includes a mechanical rotary portion and a mechanical operation for moving a read/write head relative to a magnetic medium, access time can be necessarily long and the operation of the drive slow. Further, the mechanical operation involved during the access operation is noisy.

Beside the forgoing disadvantages, it is known that the magnetic storage is relatively weak with respect to a strong magnetic field and a high temperature and humidity environment.

In order to avoid the problems encountered in the magnetic storage, attempts have been made to use a semiconductor storage by following two different approaches. In the first approach, an application program, i.e., a data processing program which allows a user to visually interact with the program and confirm a result, switches banks of the semiconductor auxiliary storage and access is accomplished to the semiconductor auxiliary storage which is deemed as a part of the main storage of the system. In the second approach, the access is made through a device drive program, i.e., a device driver, as a specific auxiliary storage and functions as a part of the operating system (OS).

However, in the first approach, an application program is designed to have a high dependency to particular type and kind of memory employed. An existing application program is usually created and prepared on the assumption that a hard disk or a floppy disk is employed as an auxiliary storage. Thus, it is necessary to modify the application program so that it may be employed with the semiconductor auxiliary storage.

In the second approach, after the device driver is actuated, the semiconductor storage device is set in its activated condition. A BOOT program is stored in a semiconductor device and the main body of software cannot be set up on an active condition. Then, it is not possible to store the OS itself in the semiconductor auxiliary storage, and it is not possible to incorporate a medium copy program, i.e., copied into such a storage, or from a floppy disk to floppy disk and, further, is dependent on a BIOS which has a high dependency on the OS.

The document FR-A-2 587 824 discloses, for use with for instance a personal computer, a semiconductor auxiliary storage means in the form of an exchangeable extension board. The extension board includes semiconductor memory chips, a battery for supplying power to the memory chips and a bus converter for signal conversion between the bus of the personal computer and the bus connecting the memory chips in such a way that the extension board can be used in the same way as a diskette.

It is an object of the present invention to solve the above mentioned problems.

It is another object of this invention to provide a compact, light weight, highly reliable and high speed information processing system while permitting the utilization of the existing software applications and programs created and written as targeted for use with particular conventional memory means, such as a floppy disk memory or a hard disk memory.

**Summary of the Invention**

These objects are achieved with an information processing system, a semiconductor auxiliary storage means and a method as claimed in claims 1, 9 and 10, respectively.

According to this invention, a information processing system of the present invention employs a semiconductor auxiliary storage as an auxiliary storage. A basic input/output program stored in the main body of the system accesses the semiconductor auxiliary storage when it receives an address request for a magnetic auxiliary storage or memory means, which request originates from the execution of a host program. The accessing is accomplished by translating an address for the magnetic storage into an address for the semiconductor auxiliary storage. The address translation is accomplished by utilizing ID information for the magnetic storage which has previously been written into the semiconductor auxiliary storage. The basic input/output program converts the access request for the magnetic storage from an application software or a disk operating system (DOS) to an access request for the semiconductor auxiliary storage and executes the request. An address for the semiconductor auxiliary storage is obtained by reading out the corresponding ID information based on the address for the magnetic storage and putting the ID information and the address for the magnetic storage into a predetermined mathematical formula.

It is preferred that the semiconductor auxiliary storage contains both a read-only storage and a erase/write storage capacity and that the information processing system include means for copying a portion of the content of the read-only storage of the semiconductor auxiliary storage into the erase/write storage. When an access is made to the semiconductor auxiliary storage having the portion of the content of the read-only storage copied into the erase/write storage, it is preferred that the information processing system includes means for translating physical address of a source area to a physical address of a target area. When the portion of the content of the read-only storage of the semiconductor auxiliary storage has been copied into the erase/write storage and an access request is issued to the source area, the access is made by employing a sum of the address and a value determined by the capacity of the copied into area as a physical address. In this manner, the access is made to the target area. Further, when an access is made to the semiconductor auxiliary storage, means may be provided for determining whether the semiconductor auxiliary storage is to be handled as a floppy disk type magnetic storage or a hard disk type magnetic storage based on a determination of the capacity of the semiconductor auxiliary storage.

It is preferable that the semiconductor auxiliary storage be constructed for easy removable mounting in the information processing system.

Other objects and attainments together with a fuller understanding of the invention will become apparent and appreciated by referring to the following description and claims taken in conjunction with the accompanying drawings.

## Brief Description of the Drawings

Fig. 1 is a block diagram of one embodiment of an information processing system comprising the present invention.

Fig. 2 is a block diagram of an internal configuration of a semiconductor auxiliary storage employed relative to this invention.

Fig. 3 is a store status of capacity information by memory type in a control register.

Fig. 4 is a hierarchy block diagram of the system configuration for the embodiment shown in Fig. 1.

Fig. 5 is a flow chart of read and write processes of the BIOS to a software interrupt INT1H$_H$ from the DOS.

Fig. 6 is a store status of ID information.

Fig. 7 is a memory space of the semiconductor auxiliary storage.

Fig. 8 is a flow chart of read and write processes of the BIOS to the software interrupt INT1B$_H$ from the DOS for selecting a processing procedure based on the capacity of the semiconductor auxiliary storage.

Fig. 9 is a flow chart of a process for determining a capacity for each memory type of semiconductor auxiliary storage.

Fig. 10 is a relationship among a data format, a memory type and a logical address in the memory space of semiconductor auxiliary storage.

Fig. 11 is a flow chart of a copy process.

Fig. 12 is a flow chart of a translation process from a logical address to a physical address.

Fig. 13 is a flow chart of a format track process.

Fig. 14 is a block diagram of a prior art information processing system.

## Description of the Preferred Embodiments

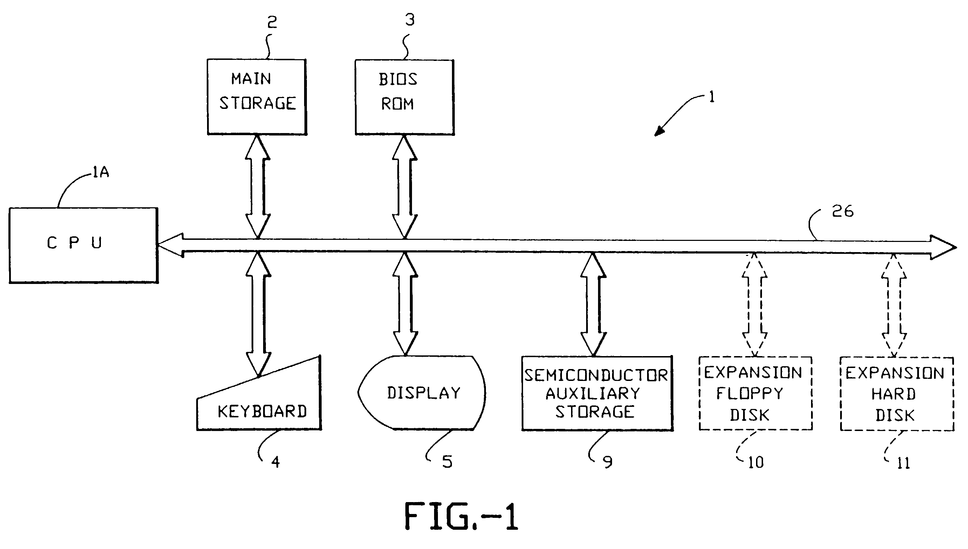

Referring now to Fig. 1 there is shown information processing system 1 of this invention comprising CPU 1A, main storage 2, BIOS ROM 3, keyboard 4, display 5, semiconductor storage 9, expansion floppy disk 10 and expansion hard disk 11 all connected to system bus 26. Main storage 2 and BIOS ROM 3 are sometimes referred to collectively as the main storage of system 1 but they are separately referred herein.

CPU 1, main storage 2, keyboard 4, and display 5 are identical to those employed in the conventional information processing system shown in Fig. 14. A physical structure of BIOS ROM 3 is also identical to a conventional BIOS but the content of a program stored therein is different in part because of the necessity to drive and control semiconductor auxiliary storage 9 instead of hard disk 6 and floppy disk 7 in the conventional system. Expansion floppy disk 10 and expansion hard disk 11 may be added as required in order to support the operation of semiconductor auxiliary storage 9. For example, these expansion disks may be added when semiconductor auxiliary storage 9 is not sufficient alone for the memory capacity necessary for auxiliary storage. On the other hand, these expansion disks are not always necessary.

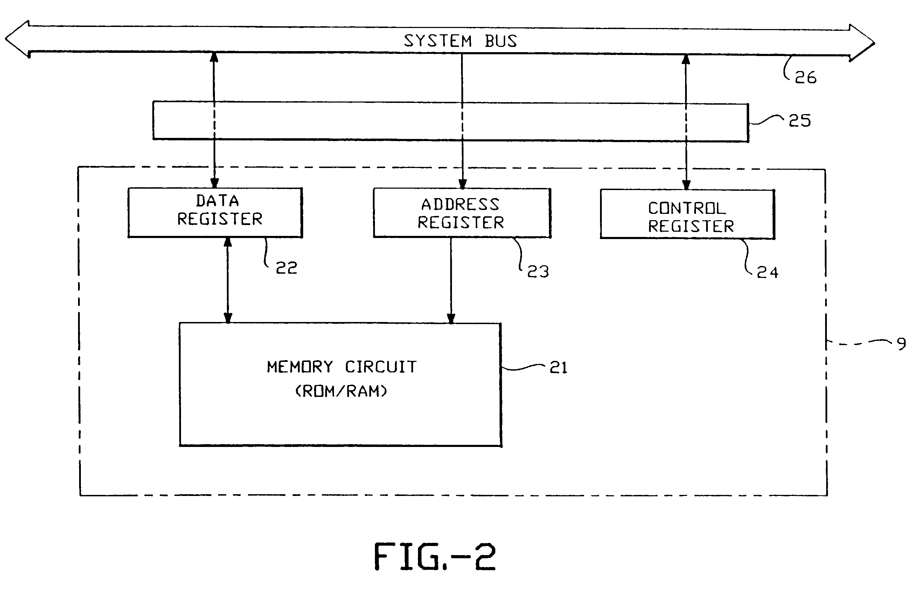

Fig. 2 is a block diagram of an internal configuration of semiconductor auxiliary storage 9. Semiconductor auxiliary storage 9 comprises memory circuit 21 including a semiconductor integrated circuit, data register 22, address register 23 and control register 24. Memory circuit 21 contains two types of memories: a read-only memory (ROM) and an erase/write memory (RAM). Semiconductor auxiliary storage 9 is physically supported on a structure generally referred to as an IC card. It has a card-like plate structure, and when it is plugged into connector 25 to system bus 26, electrical connection is made to system bus 26. In Fig. 2, only one semiconductor auxiliary storage 9 is illustrated for purposes of simplification but a plurality of such storage structures are usually provided so that a large amount of data may be stored among semiconductor auxiliary storages or separate semiconductor auxiliary storages are employed for storing software programs as well as for storing data.

The functional operation of storage 9 is generally as follows. Address register 23 designates an address in memory circuit 21. A start address for access by CPU 1 to memory circuit 21 is set by CPU 1 into address register 23 through system bus (I/O bus) 26. After the start address has been set in address register 23, data is written into data register 22 and the data is automatically written into that address in memory circuit 21. When the data is written into data register 22, address register 23 is automatically incremented so that data can be written into the next address. Similarly, when the start address is set in address register 23 and data is read from data register 22, the data is automatically read from that address of memory circuit 21. When the data is read, address register 23 is automatically incremented and data can be read out from the next address.

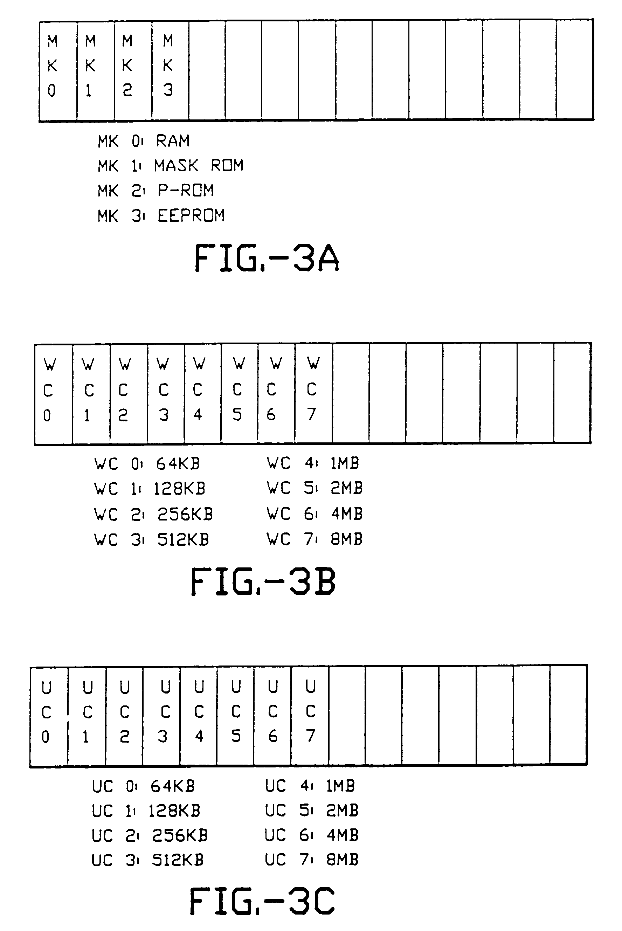

Control register 24 stores an identification code or device information indicative of the memory type of semiconductor auxiliary storage 9. Fig. 3 shows a store status in control register 24 of the memory capacity by memory type which is a portion of the device information of semiconductor auxiliary storage 9. Fig. 3A shows a type register which indicates the memory type of memory circuit 21. When bit 0 (MKO) of the register is "1", this indicates that the memory type of memory circuit 21 is a RAM. Similarly, bit 1 (MK1) indicates a mask ROM, bit 2 (MK2) indicates a P-ROM, and bit 3 (MK3) indicates an EEPROM.

Fig. 3B shows a capacity register which indicates the erase/write memory capacity of memory circuit 21. When the bit 0 (WCO) of the register is "1", this indicates that the erase/write capacity is 64 kilo bytes (KB). Similarly, bit 1 (WC1) indicates 128 KB, bit 2 (WC2) indicates 256 KB, bit 3 (WC3) indicates 512 KB, bit 4 (WC4) indicates 1 MB, bit 5 (WC5) indicates 2 MB, bit 6 (WC6) indicates 4 MB, and bit 7 (WC7) indicates 8 MB.

Fig. 3C shows a capacity register which indicates the read-only memory (ROM) capacity of memory circuit 21. When bit 0 (VC0) of the register is "1", this indicates that the ROM capacity is 64 KB. Similarly, bit 1 (UC1) indicates 128 KB, bit 2 (UC2) indicates 256 KB, bit 3 (UC3) indicates 512 KB, bit 4 (UC4) indicates 1 MB, bit 5 (UC5) indicates 2 MB, bit 6 (UC6) indicates 4 MB, and bit 7 (UC7) indicates 8 MB. The contents of those registers are detected by reading out a specific I/O port address of the information processing system 1 and the memory type and the memory capacity of semiconductor auxiliary storage 9 which is currently loaded can be determined based on the contents of these registers.

As previously indicated, semiconductor auxiliary storage 9 is removably mounted onto system bus 26 through connector 25. Storage 9, therefore, may be exchanged for use relative to each program or data stored in storage 9 as in the case of a conventional floppy disk. Since storage 9 is of a card shape by utilizing semiconductor integrated circuits for memory storage, it is easy to transport and handle. Since a ROM is used entirely or partially in memory circuit 21, one software may be copied in volume as compared to one-to-one copy in the case of a floppy disk. Accordingly, this approach is effective for the distribution of the software.

The operation of information processing system 1 of the present embodiment will now be explained.

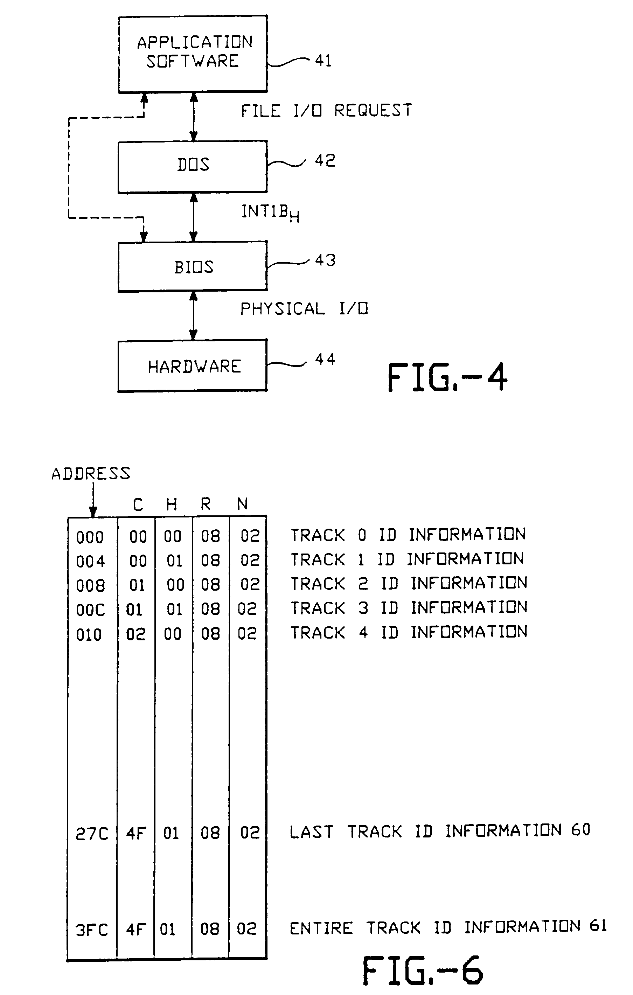

Fig. 4 shows a hierarchy block diagram of the system configuration of the system 1 relative to operation in a file access mode.

Application software 41 exists at the top level of hierarchy. Next is disk operating system (DOS) 42 which handles software interruptions due to file input/output requests from application software 41. Below DOS 42 is a basic input/output system (BIOS) 43 which is firmware that controls the lower level input/output operations relative to operation of hardware 44. The general configuration of hardware 44 is shown in Fig. 1. CPU 1 may, for example, be an Intel 16 bit microprocessor 8086. DOS 42 may be Microsoft MS-DOS. BIOS 43 may be one of the input/output systems of the disk requested by the software interrupt $INT1B_H$ from DOS 42. BIOS 43 is stored in BIOS ROM 3 together with an IPL and it operates under the control of CPU 1. DOS 42 and application software 41 are generally stored in semiconductor auxiliary storage 9 and they are transferred to main storage 2 and executed by CPU 1. DOS 42 may be stored in BIOS ROM 3.

When the information processing system shown in Fig. 1 is started, CPU 1 executes the IPL stored in BIOS ROM 3 and transfers DOS 42 stored in semiconductor auxiliary storage 9 to main storage 2. Then, CPU 1 transfers application software 41 stored in semiconductor auxiliary storage 9 to main storage 2 and the application software is executed under the control of DOS 42.

Application software 41 and DOS 42 are prepared on the assumption that the magnetic storage, such as the floppy disk or the hard disk, is employed as auxiliary storage. Accordingly, BIOS 43 is requested by DOS 42 or application software 41 to access the floppy disk or the hard disk. However, BIOS 43 converts the access request for the magnetic storage to an access request for semiconductor auxiliary storage 9 in the following manner. Accordingly, DOS 42 and application software 41 see the auxiliary storage as the magnetic storage but, in fact, is semiconductor auxiliary storage 9. In other words, in the present system, semiconductor auxiliary storage 9 is treated as if it is the magnetic storage or memory means. As a result, information processing system 1 can make use of existing application software without any need or requirement of changing the content thereof including any necessary adaptation to interface with semiconductor auxiliary storage 9.

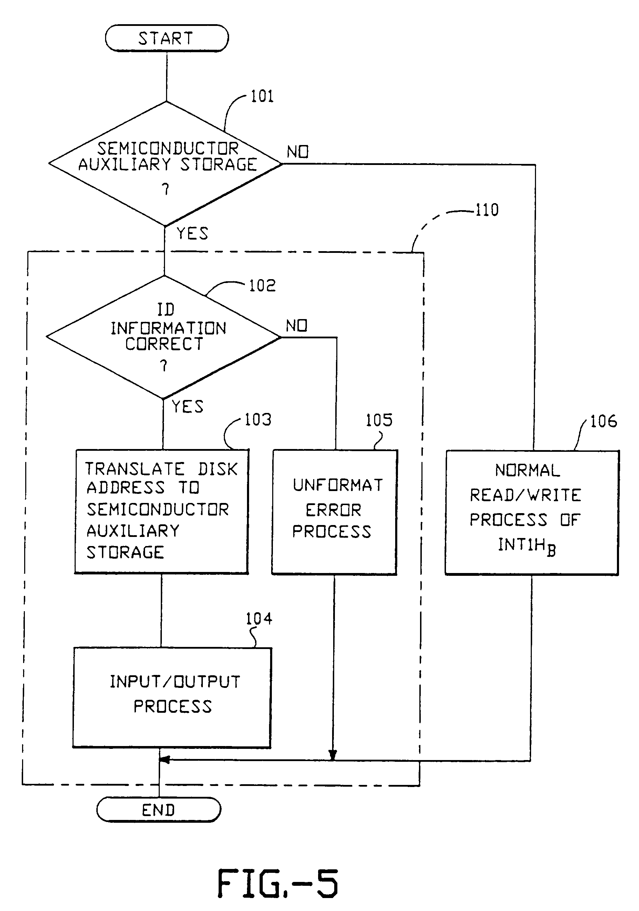

Fig. 5 is a flow chart of the read and write processes of BIOS 43 for the software interrupt $INT1B_H$ from DOS 42. When application software 41 issues a file input/output request to DOS 42, DOS 42 determines a drive associated with that file and issues the software interrupt, $INT1B_H$, to BIOS 43. DOS 42 requests BIOS 43 for access to either the floppy disk or the hard disk. BIOS 43 determines the drive associated with the request (step 101), i.e., it determines a drive number and determines if the request is to semiconductor auxiliary storage 9, which is treated as if it were the floppy disk or the hard disk, or to expansion floppy disk 10 or to expansion hard disk 11. If the request is access to expansion floppy disk 10 or expansion hard disk 11, the normal read/write process for the software interrupt $INT1B_H$ is carried (step 106). If the request is access to semiconductor auxiliary storage 9, the content of the ID information stored in semiconductor auxiliary storage 9 is examined to determine if the correct ID information has been formatted (step 102). The ID information is track ID information which would normally be written in a magnetic auxiliary storage or memory means. It is the information necessary for BIOS 43 to translate the disk address to an address in semiconductor auxiliary storage 9. If the ID information has not been formatted, the address translation cannot be carried out and an error process is carried out (step 105). The ID information will be explained in detail later. If the ID information has been correctly formatted, the disk address (cylinder number, surface number and sector number) is translated into an address in semiconductor auxiliary storage 9 based on the content of the ID information stored in semiconductor auxiliary storage 9 (step 103) and an input/output process is carried out (step 104). The address translation in the step 103 will be explained in detail later.

By the provision of the discrimination function to determine whether BIOS 43 requests the access to semiconductor auxiliary storage 9 or not, and the address translation function and the input/output function for semiconductor auxiliary storage 9 by the reference of the ID information, application software 41 and DOS 42 need not be concerned that semiconductor auxiliary storage 9 is employed as the auxiliary storage rather than a conventional magnetic storage memory means. It can be treated as if the floppy disk or the hard disk is employed as the auxiliary storage.

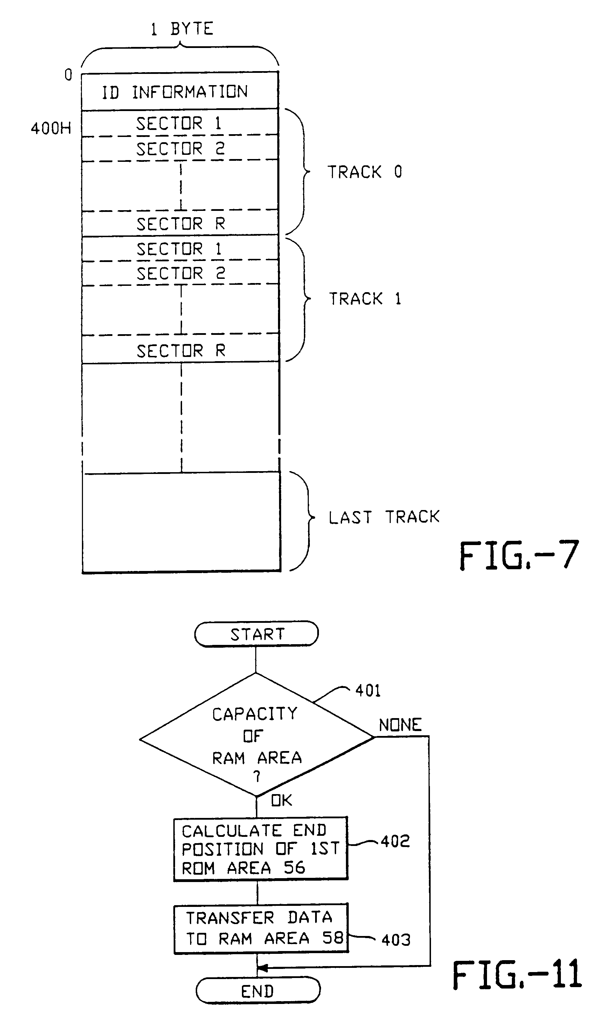

Referring to Fig. 6, the track ID information for the magnetic storage is now explained. In this particular example, semiconductor auxiliary storage 9 is treated a 640 KB floppy disk. Fig. 6 shows a format of the ID information stored in the first 1 KB area of semiconductor auxiliary storage 9. The ID information includes four bytes, one byte for each cylinder number (C), surface number (H), the number of sectors (R) and the length of sector (N) for each track. The cylinder number (C) is usually written in an ID area in one sector of one track of a floppy disk, and the surface number (H) is also written in the ID area of the floppy disk. The surface number "00" indicates a front surface and "01" indicates a rear surface. The number of sectors (R) indicates the number of sectors in a track. In the present embodiment, the number of sectors is eight for each track. The sector length (N) indicates the sector length in accordance with a sector length code of Table 1. Bit 7 thereof indicates whether it is single density or double density. In the present embodiment, each track is of single density and has 512 bytes.

Table 1

| N | 0 | 1 | 2 | 3 | 4 |
|---|---|---|---|---|---|
| SECTOR LENGTH | 128 | 256 | 512 | 1024 | 2048 |

| N | 5 | 6 | 7 | 8 OR LONGER |
|---|---|---|---|---|
| SECTOR LENGTH | 4096 | 8192 | 16384 | 32768 |

In Fig. 6, numbers in the leftmost column indicate the top address of the ID information of the respective tracks. As many 4-byte ID information for the tracks is provided as the number of tracks of a virtual floppy disk, and entire track ID information 61 having the same data content as that of lost rack ID information 60 is stored in the last four bytes of the top 1 KB of memory. The top address (hexadecimal 27C in the present invention) of last track ID information 60 can be calculated based on entire track ID information 61 by the following formula:

$$(C \times 2 \times H) \times 4.$$

By letting C = 4F and H = 1 in the above formula, the result is:

$$(4F \times 2 + 1) \times 4 = 27C.$$

The translation from a standard disk address to an address on semiconductor auxiliary storage 9 is now explained. A memory space of semiconductor auxiliary storage 9 is allotted as shown in Fig. 7. The ID information shown in Fig. 6 is stored in the top 1 KB of memory and data is stored in subsequently designated areas in the order of track number.

The translation of the disk address to the address on semiconductor auxiliary storage 9 by BIOS 43 is carried out in the following manner after it has been checked that the ID information stored in the top 1 KB of semiconductor auxiliary storage 9 has been correctly formatted. First, based on parameters Ci and Hi relating to the cylinder number and the surface number which are portions of the disk address delivered from the software interrupt $INT1B_H$, the top address of the ID information of the corresponding track is calculated by the following formula:

$$(Ci \times 2 + Hi) \times 4.$$

For example, by putting Ci = 1 and Hi = 1, which represent the third track into the above formula, we obtain "DOC". Then, based on a parameter Ri relating to the sector number, which is a portion of the disk address delivered from the software interrupt $INT1B_H$, the cylinder number (C), the surface number (H), the number sectors (R) and the sector length (N) are obtained by accessing the top address of the ID information calculated in accordance with the above formula and an input/output address of semiconductor auxiliary storage 9 corresponding to the disk address is calculated in accordance with the following formula (1) or (2):

$$400H + \{(C \times 2 + H) \times R + Ri - 1\} \times 128 \times 2^N \qquad (1)$$

$$400H + (C \times 2 + H) \times R \times 128 \times 2^N \times 2 + (Ri - 1) \times 128 \times 2^N \qquad (2)$$

Formula (1) is used in the case of double density while formula (2) is used in the case of single density. The single density and the double density can be discriminated by bit 7 of the sector length, as previously described.

In formulas (1) and (2), 400H (where H represents a hexadecimal number) indicates the top 1 KB in which the ID information is stored, (C x 2 + H) indicates the number of tracks arranged before the track in question on the assumption that there are two surfaces, (C x 2 + H). R indicates a sum of the numbers of sectors arranged before the track in question, and $128 \times 2^N$ indicates the sector length by bytes in accordance with Table 1. The difference between formula (1) and formula (2) is because the number of sectors (R) for single density is one half of the number of sectors (R) for double density.

In the present embodiment, semiconductor auxiliary storage 9 is employed as a floppy disk. It may also be employed as a hard disk in accordance with the same philosophy. In this case, the ID information for a hard disk is written into semiconductor auxiliary storage 9. When an access request to the hard disk is issued for BIOS 43, BIOS 43 accesses semiconductor auxiliary storage 9 to deliver the fetched data to DOS 42 or application software 41 as the data from the hard disk.

Semiconductor auxiliary storage 9 is removable through connector 25 as explained in connection with Fig. 2. As a result, a semiconductor auxiliary storage of an appropriate capacity may be selectively loaded depending on the application. Usually, the hard disk has a larger capacity than the floppy disk. Thus, semiconductor auxiliary storage 9 which gas a relatively large capacity is employed as a hard disk and semiconductor auxiliary storage 9 which has a relatively small capacity is employed as a floppy disk. In processing the software interrupt $INT1B_H$ of the BIOS 43, whether the semiconductor auxiliary storage is to be treated as a hard disk or a floppy disk is determined by the capacity of semiconductor auxiliary storage 9.

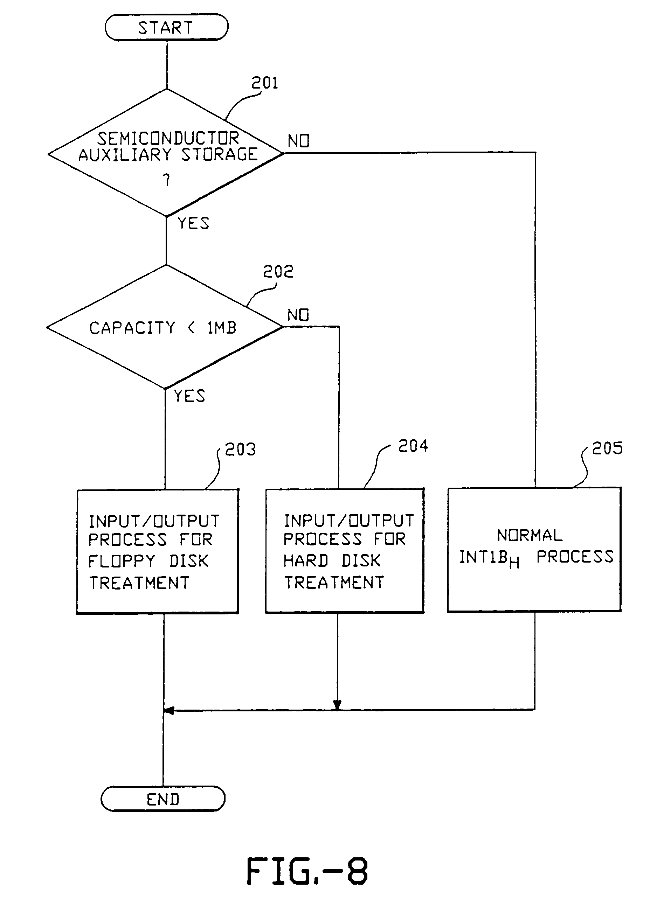

Fig. 8 is a flow chart of a process for the software interrupt $INT1B_H$ of BIOS 43. When application software 41 requests a file input/output request to DOS 42, DOS 42 issues the software interrupt $INT1B_H$ to BIOS 43. BIOS 43 determines to which device the request was issued from in order to determine whether or not it is to semiconductor auxiliary storage 9 (step 201). If it is not to semiconductor auxiliary storage 9, then a normal $INT1B_H$ process is carried out (step 205) as is known in the art. If it is to semiconductor auxiliary storage 9, the capacity thereof is examined to determine if it is less than 1 MB or not (step 202). If it is less than 1 MB, an input/output process to treat semiconductor auxiliary storage 9 as the floppy disk is carried out (step 203). The step 203 in Fig. 8 corresponds to the treatment designated in dotted line box 110 of Fig. 5. In step 202, if the capacity is more than 1 MB, an input/output process is carried out to treat semiconductor auxiliary storage 9 as the hard disk (step 204).

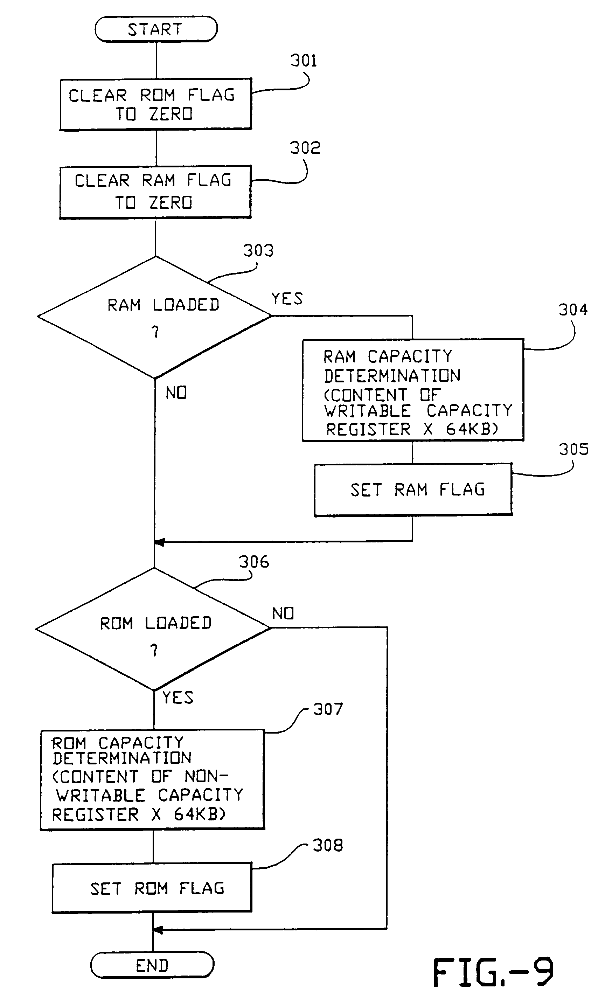

Fig. 9 is a flow chart for determining the capacity by memory type of semiconductor auxiliary storage 9 which is required in the step 202 in Fig. 8. As a preprocess to determine the memory type, the flags for indicating the memory type, i.e. the ROM flag and the RAM flag are cleared to zero (step 301 and 302). Then, a determination or examination is mode as to whether or not the RAM content has been loaded into semiconductor auxiliary storage 9 (step 303). If the RAM has been loaded, the RAM capacity is determined by the erase/write capacity register (step 304), as per the description in connection with Fig. 3B, and the RAM load flag is also set (step 305). The RAM capacity can be calculated by multiplying the content of the erase/write capacity register by 64 KB. Then, the memory type register is again examined to determine whether the ROM content has been loaded into semiconductor auxiliary storage 9 (step 306). If the ROM has been loaded, the capacity of the ROM is determined by the non erase/write capacity register (step 307), as per the description in connection with Fig. 3C, and a ROM load flag is also set (step 308). In this manner, the capacity for each memory type of semiconductor auxiliary storage 9 can be determined.

When memory circuit 21 of semiconductor auxiliary storage 9 is set up to be a ROM only memory, it is not possible to store additional data prepared in information processing system 1. If storage 9 is set up to be a RAM only memory, the stored data is destroyed when a back-up power system, such as a battery, becomes exhausted. Thus, the programs and data which are necessary as a minimum are stored in the ROM, and the programs and data modified during program execution are copied into the RAM during system initialization. When semiconductor auxiliary storage 9 is thereafter employed, the copy area is accessed by translating a logical address to a target physical address. In this way, the minimum required programs and data originally written into storage 9 and modified are not erased and any newly generated data may be additionally stored. This method of operation is now explained in detail.

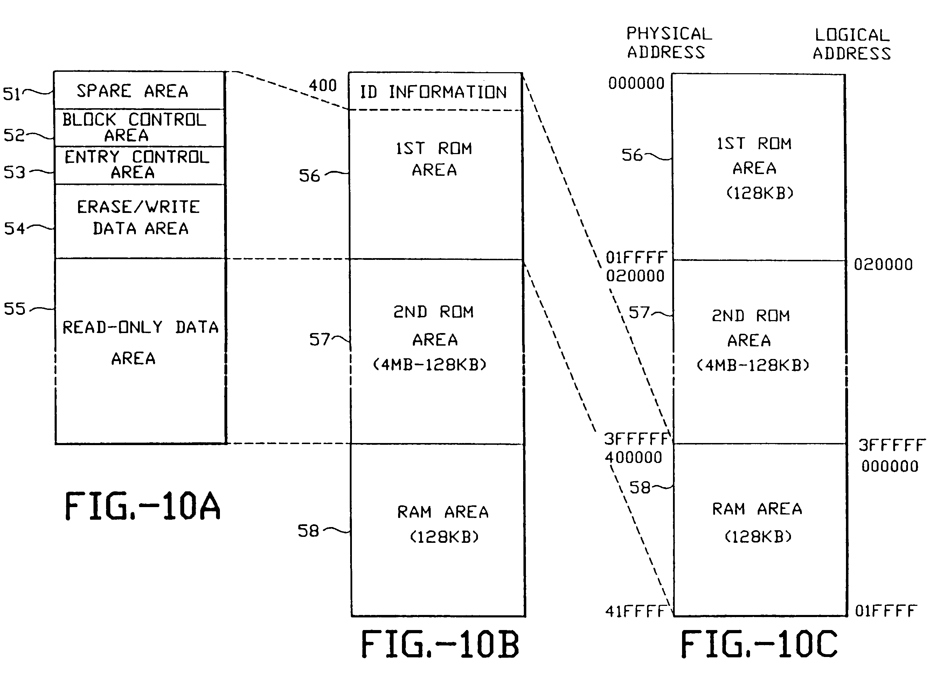

Figs. 10 illustrates the relationship among the data format, the memory type and the logical address of semiconductor auxiliary storage 9. Fig. 10A is a data format of an OS and is specifically representative of Microsoft MS-DOS. Figs. 10B and 10C show memory types associated with appropriate address locations.

The data format of Fig. 10A comprises spare area 51, block control area 52, entry control area 53 and erase/write data area 54 which should be in the erase/write memory or RAM because its contents may be modified. On the other hand, data area 55, which need only be read, may be in the ROM.

In Fig. 10B, initial programs and initial data of spare area 51, block control area 52, entry control area 53 and erase/write data area 54 have been previously stored in first ROM area 56, and the data of read-only data area 55 has been previously stored in second ROM area 57. ID information has been stored in the top 1 KB of first ROM area 56. The data corresponding to the RAM capacity is transferred from the ROM area to RAM area 58 so that the semiconductor auxiliary storage is initialized. A boundary of first ROM area 56 and second ROM area 57 is determined by the capacity of RAM area 58. The portion of the ROM area which has the same capacity as RAM area 58, which is 128 KB, is allotted from the top of the ROM area starting with first ROM area 56 and the remaining portion is second ROM area 57.

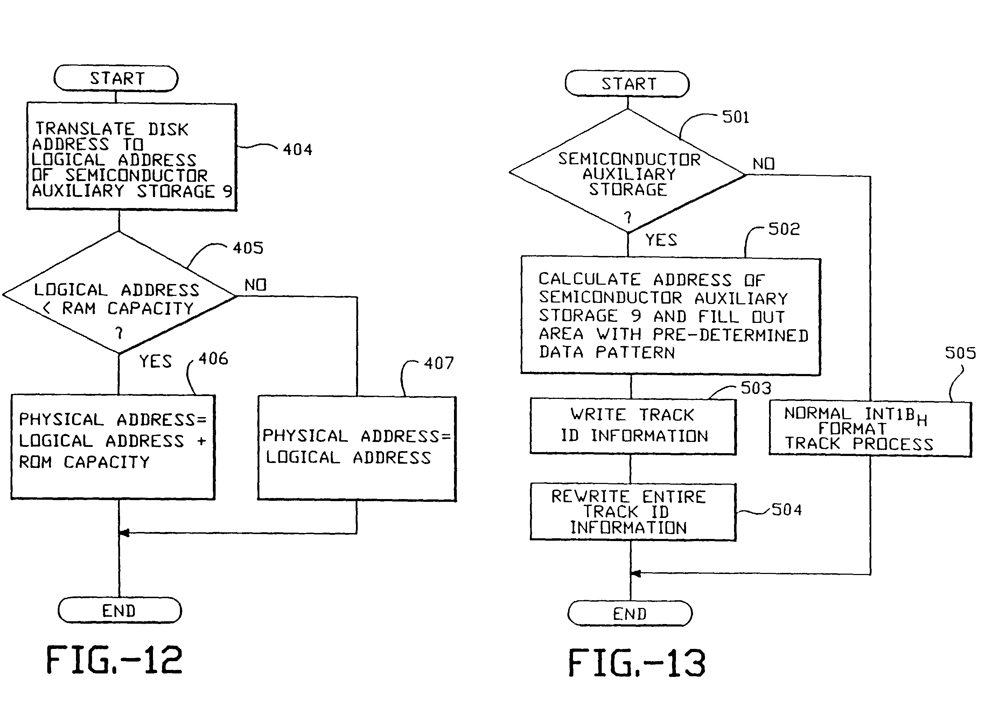

The copying is carried out by executing a copy program stored in BIOS ROM 3 via CPU 1. The copy mechanism comprises the copy program, CPU 1 and main storage 2. Fig. 11 shows a flow chart of the copy process. First, the capacity of RAM area 58 is determined (step 401). The method for determining this capacity has been previously described in connection with Fig. 9. When there is no RAM area 58, i.e., when the capacity of RAM area 58 is zero, no transfer process is carried out and the process is terminated. When the capacity of RAM area 58 is determined, an end position of first ROM area 56 is calculated based on the capacity (step 402). Then, the data of first ROM area 56 is copied to RAM area 58 (step 403). Thus, the copy process is completed and semiconductor auxiliary storage 9 is initialized.

Fig. 10C shows the memory type as well as the logical address and the physical address. The term logical address as used therein means an address which indicates a virtual logical space for the information processing system for semiconductor auxiliary storage 9 after initialization via the copying process described above. The physical address means an address which indicates a physical space. Physically, a 4 MB ROM (first and second ROM areas 56 and 57) followed by the 128 KB RAM 58 is arranged, but BIOS 43 is treated as if the 4 MB-128 KB second ROM area 57 exists following the 128 KB RAM area 58, as shown in the logical address column of Fig. 10C.

Fig. 12 is a flow chart of a process for converting a logical address to a physical address when BIOS 43 accesses the initialized semiconductor auxiliary storage 9 in response to a software interrupt $INT1B_H$ to read and write data. First, the disk address is translated to a logical address of semiconductor auxiliary storage 9 (step 404). The method for translating the disk address to the logical address has already been explained in connection with Fig. 5 and it is omitted here. The translated address corresponds to the logical address shown on the right hand of the memory space of Figs. 10C. Then, whether or not the translated logical address is smaller than the RAM capacity (indicated in bytes) is determined (step 405). In the present embodiment example, since the RAM capacity is 128 KB, whether or not the logical address is smaller than 128 KB is determined. In step 405, if the logical address is smaller than the RAM capacity, a sum of the logical address and the ROM capacity (total capacity of the first and second ROM areas) is employed as a real address or the physical address of semiconductor auxiliary storage 9 (step 406). Since the ROM capacity is 4 MB in the present embodiment, 4 MB is added. Accordingly, the logical address actually designates a point in RAM area 58. On the other hand, in step 405, if the logical address exceeds the RAM capacity, the logical address is employed as the physical address in its present form (step 407). This address designates a point in second ROM area 57.

In accordance with this method, the semiconductor auxiliary storage provides for the modification of basic programs and data while they are nonvolatility retained in memory. In the present embodiment, the logical address of RAM area 58 is smaller than the logical address of second ROM area 57, although the logical address of RAM area 58 may be arbitrarily selected. In this case, the translation algorithm from the logical address to the physical address needs to be appropriately modified.

Attention is now directed to a format track process which is equivalent to the format track process for the floppy disk and the hard disk. For semiconductor auxiliary storage 9 having memory circuit 21, which is configured as RAM only memory, and in which no information has been written, a format track process must be carried out. Fig. 13 is a flow chart of the format track process for one track. The format track process, however, is sequentially accomplished from the track 0 to the last track. In the case of track 0, when BIOS 43 receives a request for the format track process from DOS 42, BIOS 43 determines the device associated with the request and determines whether the request is to semiconductor auxiliary storage 9 or to other I/O devices, for example, expansion floppy disk 10 or expansion hard disk 11 (step 501).

If the request is not to semiconductor auxiliary storage 9, a normal $INT1B_H$ format track process is carried out (step 505). If it is to semiconductor auxiliary storage 9, the address on semiconductor auxiliary storage 9 is calculated based on the disk address for track 0 and an area corresponding to a one-track capacity below the calculated address is filled out by a predetermined data pattern. As an example, the memory space in Fig. 7 is immediately after the ID information area, i.e., address 400. The data pattern, "E5" is usually employed for all words. Thus, the area is filled out by data containing no information. Then, the ID information of the track corresponding to the disk address (disk address indicating track 0) is written into the ID information area (step 503). As an example, the ID information area of Fig. 6 is written into the four-byte area (addresses 000 to 003). Then, the same data as the ID information on track 0 immediately written before is written into the last four-byte area of the ID information area as the entire track ID information (step 504). With reference to the ID information area of Fig. 6 as an example, the ID information of the track 0 is written into the area starting at the address 3FC. Thus, the format track process of the track 0 is completed and the format track process of track 1 is then carried out. The data area following the data area of track 0 is filled with "E5", the ID information of the first track is written into the four-byte area following the ID information of track 0 and the entire track ID information of the area starting at address 3FC is rewritten as the ID information of the first track. The same process is repeated until the final track is reached and the format track process for the semiconductor auxiliary storage is then complete. In this manner, the DOS and the application program may be handled by semiconductor auxiliary storage 9 in the same manner as they are handled by a hard disk memory or a floppy disk memory.

Since the format track process is carried out in the manner described above, whether or not the formatting is normally done is determined by checking whether the entire track ID information coincides with the last track ID information. If the format process is interrupted and not carried out, normally the entire track ID information does not coincide with the last track ID information.

While the invention has been described in conjunction with specific embodiments, it is evident to those skilled in the art that many further alternatives, modifications and variations will be apparent in light of the forgoing description. For example, Microsoft DOS is employed in the embodiment disclosed although the implementation of the present invention need not be limited to a DOS type system.

Further, the present invention is not limited to the BIOS for the purposes of software interrupt $INT1B_H$ but, for example, a disk input/output routine which inputs and outputs to and from semiconductor auxiliary storage 9 may be employed. Thus, the invention described herein is intended to embrace at such alternatives, modifications, applications and variations as fall within the spirit and scope of the appended claims.

## Claims

1. An information processing system comprising:

   a central processing unit (1A) for executing a program;
   a main storage (2) for temporarily storing the program to be executed by said central processing unit and data generated by the execution of the program;
   semiconductor auxiliary storage means (9) removably mounted to a system bus of said information processing system through connector means (25), adapted to transfer memory content to and from said main storage, and comprising RAM means (21), ROM means (21) and control register means (24);
   a memory (3) for storing a basic input/output program to control hardware of said auxiliary storage means;
   wherein said basic input/output program is designed to access said auxiliary storage means when an access request to an auxiliary storage means construed as magnetic disk is received as a result of the execution of a host program; and
   means for converting a disk address into a specific address of the semiconductor auxiliary storage means, wherein said control register means (24) stores an identification code (ID) indicative of the memory type of said semiconductor auxiliary storage means and its capacity.

2. The system according to claim 1, wherein said semiconductor auxiliary storage means (9) stores a program including an access request to magnetic storage memory means.

3. The system according to claim 1 or 2, wherein said information processing system including means for copying a portion of the content of said ROM means (21) to said RAM means (21) of said semiconductor auxiliary storage means (9).

4. The system according to claim 1, 2 or 3, further comprising means for translating a physical address of a source of copy to a physical address of a target of copy when access is made to said semiconductor auxiliary storage means wherein a portion of the content of said ROM means (21) has been copied to said RAM means (21) of said semiconductor auxiliary storage means (9).

5. The system according to any of claims 1 to 4, wherein access to said semiconductor auxiliary storage means (9) is accomplished by means to translate an address for magnetic storage memory means to an address for said semiconductor auxiliary storage means.

6. The system according to claim 5, wherein said semiconductor auxiliary storage means (9) stores track ID information designated for magnetic storage memory means, said translation means employing said track ID information to make said address translation.

7. The system according to any of the preceding claims, further comprising means for determining whether said semiconductor auxiliary storage means (9) is to be treated as a floppy disk magnetic storage or a hard disk magnetic storage based on the capacity of said semiconductor auxiliary storage means when an access is made to said semiconductor auxiliary storage means.

8. The system according to any of the preceding claims, wherein said semiconductor auxiliary storage means (9) is removably mounted within said information processing system.

9. A semiconductor auxiliary storage means for use as a substitute for auxiliary magnetic storage memory means adapted to transfer memory content thereof to and from a main storage of an information processing system, such as to permit the utilization of existing software applications and programs targeted for use with said auxiliary magnetic storage memory means and comprising means to receive an address request for said auxiliary magnetic storage memory means and translate an address for said auxiliary magnetic storage memory means into an address for said semiconductor auxiliary storage means (9), said semiconductor auxiliary storage means comprising RAM means (21), ROM means (21) and control register means (24), wherein said control register means (24) stores an identification code (ID) indicative of the memory type of said semiconductor auxiliary storage means and its capacity.

10. A method of utilizing a semiconductor auxiliary storage means (9) in an information processing system while permitting the utilization of previously existing software targeted for use with conventional magnetic storage memory means comprising the steps of:

storing in said semiconductor auxiliary storage means (9) ID information corresponding for said conventional magnetic storage memory means,
capturing an access request for said conventional magnetic storage memory means,
translating an address based on the access request for said conventional magnetic storage memory means to an address based on access to said semiconductor auxiliary storage means employing said ID information, and thereafter executing the translated request.

**Patentansprüche**

1. Informationsverarbeitungssystem, umfassend:

eine Zentraleinheit (1A) zur Ausführung eines Programms,
einen Hauptspeicher (2) zur vorübergehenden Speicherung des von der Zentraleinheit auszuführenden Programms und von Daten, die bei der Ausführung des Programms erzeugt werden,
eine Halbleiter-Hilfsspeicheranordnung (9), die entfernbar an einem Systembus des Informationsverarbeitungssystems mittels Steckverbindermitteln (25) montiert ist, in der Lage ist, Speicherinhalt zum und vom Hauptspeicher zu übertragen und RAM-Mittel (21), ROM-Mittel (21) und Steuerregistermittel (24) umfaßt,
einen Speicher (3) zur Speicherung eines Basis-Eingabe/Ausgabe-Programms zur Steuerung der Hardware der Hilfsspeicheranordnung,
wobei das Basis-Eingabe/Ausgabe-Programm so ausgelegt ist, daß es auf die Hilfsspeicheranordnung zugreift, wenn als Ergebnis der Ausführung eines Hostprogramms eine Zugriffsanforderung zu einer als Magnetplatte interpretierten Speicheranordnung empfangen wird, und
Mittel zur Umsetzung einer Plattenadresse in eine spezielle Adresse der Halbleiter-Hilfsspeicheranordnung,
wobei die Steuerregistermittel (24) einen Identifikationscode (ID) speichern, der den Speichertyp der Halbleiter-Hilfsspeicheranordnung und deren Kapazität angibt.

2. System nach Anspruch 1, bei dem die Halbleiter-Hilfsspeicheranordnung (9) ein eine Zugriffsanforderung zu einer Magnetspeicher-Speicheranordnung enthaltendes Programm speichert.

3. System nach Anspruch 1 oder 2, bei dem das Informationsverarbeitungssystem Mittel zum Kopieren eines Abschnitts des Inhalts der ROM-Mittel (21) zu den RAM-Mitteln (21) der Halbleiter-Hilfsspeicheranordnung (9) enthält.

4. System nach Anspruch 1, 2 oder 3, ferner umfassend Mittel zu Übersetzung einer physikalischen Adresse einer Quelle einer Kopie in eine physikalische Adresse eines Ziels einer Kopie, wenn auf die Halbleiter-Hilfsspeicheranordnung zugegriffen wird, worin ein Abschnitt des Inhalts der ROM-Mittel (21) in die RAM-Mittel (21) der Halbleiter-Hilfsspeicheranordnung (9) kopiert wurde.

5. System nach einem der Ansprüche 1 bis 4, bei dem der Zugriff auf die Halbleiter-Hilfsspeicheranordnung (9) durch Mittel zur Übersetzung einer Adresse für eine Magnetspeicher-Speicheranordnung zu einer Adresse für die Halbleiter-Hilfsspeicheranordnung ausgeführt wird.

6. System nach Anspruch 5, bei dem die Halbleiter-Hilfsspeicheranordnung (9) eine Spur-ID-Information speichert, welche für eine Magnetspeicher-Speicheranordnung bestimmt ist, wobei die Übersetzungsmittel die Spur-ID-Information zur Ausführung der Adressenübersetzung einsetzen.

7. System nach einem der vorhergehenden Ansprüche, ferner umfassend Mittel zur Bestimmung, ob die Halbleiter-Hilfsspeicheranordnung (9) als ein Floppy-Disk-Magnetspeicher oder als ein Festplatten-Magnetspeicher zu behandeln ist, und zwar auf der Basis der Kapazität der Halbleiter-Hilfsspeicheranordnung, wenn ein Zugriff auf die Halbleiter-Hilfsspeicheranordnung erfolgt.

8. System nach einem der vorhergehenden Ansprüche, bei dem die Halbleiter-Hilfsspeicheranordnung (9) entfernbar innerhalb des Informationsverarbeitungssystems montiert sind.

9. Halbleiter-Hilfsspeicheranordnung zur Verwendung als Ersatz für eine Magnetspeicher-Hilfsspeicheranordnung, die in der Lage ist, ihren Speicherinhalt auf und von einem Hauptspeicher eines Informationsverarbeitungssystems zu übertragen, um die Verwendung existierender Softwareanwendungen und Programme, die für den Einsatz mit der Magnetspeicher-Hilfsspeicheranordnung ausgelegt sind, zu gestatten, und umfassend Mittel zum Empfang einer Adressenanforderung für die Magnetspeicher-Hilfsspeicheranordnung und zur Übersetzung einer Adresse für die Magnetspeicher-Hilfsspeicheranordnung in eine Adresse für die Halbleiter-Hilfsspeicheranordnung, wobei die Halbleiter-Hilfsspeicheranordnung RAM-Mittel (21), ROM-Mittel (21) und Steuerregistermittel (24) umfaßt, wobei die Steuerregistermittel (24) einen Identifikationscode (ID) speichern, der den Speichertyp der Halbleiter-Hilfsspeicheranordnung und deren Kapazität angibt.

10. Verfahren der Verwendung einer Halbleiter-Hilfsspeicheranordnung (9) in einem Informationsverarbeitungssystem unter Gestattung der Verwendung vorher existierender Software, die zum Einsatz mit einer herkömmlichen Magnetspeicher-Speicheranordnung ausgelegt ist, umfassend die Schritte:

> Speicherung von ID-Information entsprechend der herkömmlichen Magnetspeicher-Speicheranordnung in dem Halbleiter-Hilfsspeicheranordnung (9),
> Abfangen einer Zugriffsanforderung für die herkömmliche Magnetspeicher-Speicheranordnung,
> Übersetzen einer auf der Adressenanforderung für die herkömmliche Magnetspeicher-Speicheranordnung basierenden Adresse in eine auf dem Zugriff auf die Halbleiter-Hilfsspeicheranordnung basierende Adresse unter Einsatz der ID-Information, und
> danach Ausführen der übersetzten Anforderung.

## Revendications

1. Un système informatique comprenant : une unité centrale de traitement (1A) destinée à exécuter un programme ;

> une mémoire centrale (2) pour enregistrer temporairement le programme à exécuter par l'unité centrale de traitement, et des données qui sont générées par l'exécution du programme ;
> des moyens de mémoire auxiliaires à semiconducteurs (9), montés de façon amovible sur un bus de système du système informatique, par l'intermédiaire de moyens de connexion (25), conçus pour transférer de l'information de mémoire vers la mémoire centrale et à partir de celle-ci, et comprenant des moyens du type mémoire vive (21), des moyens du type mémoire morte (21) et des moyens du type registre de commande (24) ;

une mémoire (3) pour enregistrer un programme d'entrée/sortie de base, pour commander le matériel des moyens d'enregistrement auxiliaires ;

dans lequel le programme d'entrée/sortie de base est conçu pour accéder aux moyens d'enregistrement auxiliaires lorsqu'une demande d'accès à des moyens d'enregistrement auxiliaires considérés comme un disque magnétique, est reçue sous l'effet de l'exécution d'un programme hôte;et

des moyens pour convertir une adresse de disque en une adresse spécifique des moyens d'enregistrement auxiliaires à semiconducteurs,

dans lequel les moyens du type registre de commande (24) enregistrent un code d'identification (ID) qui indique le type de mémoire des moyens d'enregistrement auxiliaires à semiconducteurs et leur capacité.

2. Le système selon la revendication 1, dans lequel les moyens d'enregistrement auxiliaires à semiconducteurs (9) conservent un programme qui contient une demande d'accès à des moyens de mémoire à enregistrement magnétique.

3. Le système selon la revendication 1 ou 2, dans lequel le système informatique comprend des moyens pour copier une partie du contenu des moyens du type mémoire morte (21) vers les moyens du type mémoire vive (21) des moyens d'enregistrement auxiliaires à semiconducteurs (9).

4. Le système selon la revendication 1, 2 ou 3, comprenant en outre des moyens pour traduire une adresse physique d'une source de copie en une adresse physique d'une destination de copie, au moment de l'accomplissement d'un accès aux moyens d'enregistrement auxiliaires à semiconducteurs dans lesquels une partie du contenu des moyens du type mémoire morte (21) a été copiée vers les moyens du type mémoire vive (21) des moyens d'enregistrement auxiliaires à semiconducteurs (9).

5. Le système selon l'une quelconque des revendications 1 à 4, dans lequel l'accès aux moyens d'enregistrement auxiliaires à semiconducteurs (9) est accompli par des moyens qui traduisent une adresse pour des moyens de mémoire à enregistrement magnétique, en une adresse pour les moyens d'enregistrement auxiliaires à semiconducteurs.

6. Le système selon la revendication 5, dans lequel les moyens d'enregistrement auxiliaires à semiconducteurs (9) enregistrent une information d'identification de piste qui est prévue pour des moyens de mémoire à enregistrement magnétique, les moyens de traduction employant cette information d'identification de piste pour effectuer la traduction d'adresse.

7. Le système selon l'une quelconque des revendications précédentes, comprenant en outre des moyens pour déterminer si les moyens d'enregistrement auxiliaires à semiconducteurs (9) doivent être traités comme une mémoire magnétique à disquette ou une mémoire magnétique à disque dur, sur la base de la capacité des moyens d'enregistrement auxiliaires à semiconducteurs, au moment où un accès aux moyens d'enregistrement auxiliaires à semiconducteurs est effectué.

8. Le système selon l'une quelconque des revendications précédentes, dans lequel les moyens d'enregistrement auxiliaires à semiconducteurs (9) sont installés de façon amovible dans le système informatique.

9. Moyens d'enregistrement auxiliaires à semiconducteurs prévus pour l'utilisation en remplacement de moyens de mémoire à enregistrement magnétique auxiliaires, adaptés pour transférer leur information de mémoire vers une mémoire centrale d'un système informatique, et à partir de cette dernière, de façon à permettre l'utilisation de programmes et d'applications logicielles existants, prévus pour être utilisés avec les moyens de mémoire à enregistrement magnétique auxiliaires, et comprenant des moyens destinés à recevoir une demande d'adresse pour les moyens de mémoire à enregistrement magnétique auxiliaires, et à traduire une adresse pour les moyens de mémoire à enregistrement magnétique auxiliaires en une adresse pour les moyens d'enregistrement auxiliaires à semiconducteurs (9), ces moyens d'enregistrement auxiliaires à semiconducteurs comprenant des moyens du type mémoire vive (21), des moyens du type mémoire morte (21) et des moyens du type registre de commande (24), dans lesquels les moyens du type registre de commande (24) enregistrent un code d'identification (ID) indiquant le type de mémoire des moyens d'enregistrement auxiliaires à semiconducteurs et leur capacité.

**10.** Un procédé d'utilisation de moyens d'enregistrement auxiliaires à semiconducteurs (9) dans un système informatique, tout en permettant l'utilisation d'un logiciel existant précédemment, prévu pour l'utilisation avec des moyens de mémoire à enregistrement magnétique classiques, comprenant les étapes suivantes :

on enregistre dans les moyens d'enregistrement auxiliaires à semiconducteurs (9) une information d'identification correspondant aux moyens de mémoire à enregistrement magnétique classiques,

on prend en charge une demande d'accès pour les moyens de mémoire à enregistrement magnétique classiques,

on traduit une adresse basée sur la demande d'accès concernant les moyens de mémoire à enregistrement magnétique classiques, en une adresse basée sur l'accès aux moyens d'enregistrement auxiliaires à semiconducteurs, en employant l'information d'identification, et

on exécute ensuite la demande traduite.

FIG.-1

FIG.-2

| M K 0 | M K 1 | M K 2 | M K 3 | | | | | | | | | | | | |
|---|---|---|---|---|---|---|---|---|---|---|---|---|---|---|---|

MK 0: RAM

MK 1: MASK ROM

MK 2: P-ROM

MK 3: EEPROM

# FIG.-3A

| W C 0 | W C 1 | W C 2 | W C 3 | W C 4 | W C 5 | W C 6 | W C 7 | | | | | | | | |
|---|---|---|---|---|---|---|---|---|---|---|---|---|---|---|---|

WC 0: 64KB          WC 4: 1MB

WC 1: 128KB         WC 5: 2MB

WC 2: 256KB         WC 6: 4MB

WC 3: 512KB         WC 7: 8MB

# FIG.-3B

| U C 0 | U C 1 | U C 2 | U C 3 | U C 4 | U C 5 | U C 6 | U C 7 | | | | | | | | |
|---|---|---|---|---|---|---|---|---|---|---|---|---|---|---|---|

UC 0: 64KB          UC 4: 1MB

UC 1: 128KB         UC 5: 2MB

UC 2: 256KB         UC 6: 4MB

UC 3: 512KB         UC 7: 8MB

# FIG.-3C

```
                 ┌─────────────────┐
                 │   APPLICATION   │
                 │    SOFTWARE     │── 41
                 └─────────────────┘
                   ▲    ▲
                   ┆    ┃  FILE I/O REQUEST
                   ┆    ▼
                 ┌─────────────────┐
                 │      DOS        │── 42
                 └─────────────────┘
                   ┆    ┃
                   ┆    ┃  INT1B_H
                   ┆    ▼
                 ┌─────────────────┐
                 │      BIOS       │── 43
                 └─────────────────┘
                        ┃
                        ┃  PHYSICAL I/O
                        ▼
                 ┌─────────────────┐
                 │    HARDWARE     │── 44        FIG.-4
                 └─────────────────┘
```

ADDRESS

| ADDRESS | C | H | R | N | |
|---------|-----|-----|-----|-----|---|
| 000 | 00 | 00 | 08 | 02 | TRACK 0 ID INFORMATION |
| 004 | 00 | 01 | 08 | 02 | TRACK 1 ID INFORMATION |
| 008 | 01 | 00 | 08 | 02 | TRACK 2 ID INFORMATION |
| 00C | 01 | 01 | 08 | 02 | TRACK 3 ID INFORMATION |
| 010 | 02 | 00 | 08 | 02 | TRACK 4 ID INFORMATION |
| 27C | 4F | 01 | 08 | 02 | LAST TRACK ID INFORMATION 60 |
| 3FC | 4F | 01 | 08 | 02 | ENTIRE TRACK ID INFORMATION 61 |

FIG.-6

START

101

SEMICONDUCTOR
AUXILIARY STORAGE
?

NO

YES

110

102

ID
INFORMATION
CORRECT
?

NO

YES

103

TRANSLATE DISK
ADDRESS TO
SEMICONDUCTOR
AUXILIARY
STORAGE

105

UNFORMAT
ERROR
PROCESS

106

NORMAL
READ/WRITE
PROCESS OF
INT1H$_B$

104

INPUT/OUTPUT
PROCESS

END

FIG.-5

1 BYTE

| | |
|---|---|
| 0 | ID INFORMATION |
| 400H | SECTOR 1 |
| | SECTOR 2 |
| | |
| | SECTOR R |
| | SECTOR 1 |
| | SECTOR 2 |
| | |
| | SECTOR R |
| | |
| | |

TRACK 0

TRACK 1

LAST TRACK

FIG.-7

START

CAPACITY OF RAM AREA ? — 401

NONE

OK

CALCULATE END POSITION OF 1ST ROM AREA 56 — 402

TRANSFER DATA TO RAM AREA 58 — 403

END

FIG.-11

START

*201*

SEMICONDUCTOR AUXILIARY STORAGE ? — NO

YES

*202*

CAPACITY < 1MB — NO

YES

*203*

INPUT/OUTPUT PROCESS FOR FLOPPY DISK TREATMENT

*204*

INPUT/OUTPUT PROCESS FOR HARD DISK TREATMENT

*205*

NORMAL INT1B$_H$ PROCESS

END

# FIG.-8

START

CLEAR ROM FLAG
TO ZERO — 301

CLEAR RAM FLAG
TO ZERO — 302

RAM LOADED
? — 303

YES →

NO ↓

RAM CAPACITY
DETERMINATION
(CONTENT OF
WRITABLE CAPACITY
REGISTER X 64KB) — 304

SET RAM FLAG — 305

ROM LOADED
? — 306

NO →

YES ↓

ROM CAPACITY
DETERMINATION
(CONTENT OF NON-
WRITABLE CAPACITY
REGISTER X 64KB) — 307

SET ROM FLAG — 308

END

FIG.-9

20

EP 0 410 462 B1

| 51 | SPARE AREA |
| 52 | BLOCK CONTROL AREA |
| 53 | ENTRY CONTROL AREA |
| 54 | ERASE/WRITE DATA AREA |
| 55 | READ-ONLY DATA AREA |

# FIG.-10A

| 400 | ID INFORMATION |
| 56 | 1ST ROM AREA |
| 57 | 2ND ROM AREA (4MB-128KB) |
| 58 | RAM AREA (128KB) |

# FIG.-10B

PHYSICAL ADDRESS          LOGICAL ADDRESS

| 000000 | | |
| 56 | 1ST ROM AREA (128KB) | |
| 01FFFF / 020000 | | 020000 |
| 57 | 2ND ROM AREA (4MB-128KB) | |
| 3FFFFF / 400000 | | 3FFFFF / 000000 |
| 58 | RAM AREA (128KB) | |
| 41FFFF | | 01FFFF |

# FIG.-10C

EP 0 410 462 B1

START

TRANSLATE DISK
ADDRESS TO
LOGICAL ADDRESS
OF SEMICONDUCTOR
AUXILIARY STORAGE 9 ⌐ 404

LOGICAL ADDRESS
< RAM CAPACITY
? ⌐ 405

NO

YES ⌐ 406

PHYSICAL ADDRESS=
LOGICAL ADDRESS +
ROM CAPACITY

⌐ 407

PHYSICAL ADDRESS=
LOGICAL ADDRESS

END

# FIG.-12

START

SEMICONDUCTOR
AUXILIARY
STORAGE
? ⌐ 501

NO

YES

CALCULATE ADDRESS OF
SEMICONDUCTOR AUXILIARY
STORAGE 9 AND FILL OUT
AREA WITH PRE-DETERMINED
DATA PATTERN ⌐ 502

WRITE TRACK
ID INFORMATION ⌐ 503

NORMAL INT1B$_H$
FORMAT
TRACK PROCESS

505

REWRITE ENTIRE
TRACK ID
INFORMATION ⌐ 504

END

# FIG.-13

FIG.-14
PRIOR ART

CPU  1

MAIN STORAGE  2

BIOS ROM  3

KEYBOARD  4

DISPLAY  5

HARD DISK  6

FLOPPY DISK  7

26